(19) **Europäisches Patentamt**
**European Patent Office**
**Office européen des brevets**

(11) **EP 3 822 172 B1**

(12) **FASCICULE DE BREVET EUROPEEN**

(45) Date de publication et mention
de la délivrance du brevet:
**06.04.2022   Bulletin 2022/14**

(21) Numéro de dépôt: **20203676.0**

(22) Date de dépôt: **23.10.2020**

(51) Classification Internationale des Brevets (IPC):
**B64D 33/02** *(2006.01)*      **F02C 7/052** *(2006.01)*
**B64D 45/00** *(2006.01)*      **F02M 35/09** *(2006.01)*
**F02M 35/10** *(2006.01)*

(52) Classification Coopérative des Brevets (CPC):
**B64D 33/02; F02C 7/052; F02C 7/057;**
**F02M 35/082;** B64D 2033/0246; B64D 2045/0085;
F02M 35/10; F02M 35/1038; F05D 2220/329

(54) **SYSTEME DE COMMANDE D'UN CLAPET D'OBTURATION D'UN AERONEF, AERONEF EQUIPE D'UN TEL SYSTEME DE COMMANDE ET PROCEDE DE COMMANDE ASSOCIE**

SYSTEM ZUM STEUERN EINER VENTILKLAPPE EINES LUFTFAHRZEUGS, MIT DIESEM STEUERUNGSSYSTEMS AUSGESTATTETES LUFTFAHRZEUG UND ENTSPRECHENDES STEUERUNGSVERFAHREN

SYSTEM FOR CONTROLLING A CHECK VALVE OF AN AIRCRAFT, AIRCRAFT PROVIDED WITH SUCH A CONTROL SYSTEM AND ASSOCIATED CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **14.11.2019   FR 1912718**

(43) Date de publication de la demande:
**19.05.2021   Bulletin 2021/20**

(73) Titulaire: **Airbus Helicopters**
**13725 Marignane Cedex (FR)**

(72) Inventeur: **BIGEARD, Antoine**
**13880 VELAUX (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 1 143 232        EP-A1- 2 957 503**
**KR-A- 20170 121 437     US-A1- 2009 007 528**
**US-A1- 2013 092 798     US-A1- 2017 067 814**

• **Donaldson Filtration Solutions: "Bell 407/GX IBF Inlet Barrier Filter (IBF) System", , 15 avril 2015 (2015-04-15), XP055712087, Extrait de l'Internet: URL:http://donaldsonaerospace-defense.com/ library/files/documents/pdfs/2015-BellLigh t-Bell407-013015.pdf [extrait le 2020-07-06]**

EP 3 822 172 B1

## Description

La présente invention se rapporte au domaine technique des aéronefs et plus particulièrement aux systèmes de commande pour commander un clapet d'obturation d'un aéronef. Un tel clapet d'obturation permet d'ouvrir un circuit de dérivation pour alimenter en air au moins un moteur de l'aéronef. Dans un mode de fonctionnement normal, l'air alimentant un tel moteur de l'aéronef passe dans une entrée d'air et au travers d'un filtre à air positionné dans cette entrée d'air.

Alternativement à un moteur, l'air passant au travers du filtre à air peut permettre d'alimenter tout autre équipement de l'aéronef tel que notamment un appareil assurant une climatisation de l'air intérieur à l'aéronef. Cependant à des fins de simplification rédactionnelle l'air passant dans le circuit de dérivation sera considéré comme destiné à alimenter le ou les moteurs de l'aéronef.

De même, dans la suite de la demande le terme de pilote de l'aéronef sera utilisé à des fins de simplification mais pourra éventuellement désigner toute personne de l'équipage de l'aéronef habilitée à le piloter, telle que par exemple un copilote. Le terme de pilote peut également permettre de désigner une personne non embarquée à bord de l'aéronef et participant à distance et en tout ou partie au pilotage cet aéronef.

De façon générale, il est connu d'indiquer à un pilote de l'aéronef un niveau de colmatage d'un filtre à air. En outre, le niveau de colmatage d'un filtre à air a des effets pénalisant sur le fonctionnement du système alimenté par l'entrée d'air. Dans le cas de l'entrée d'air d'un moteur, le colmatage du filtre à air génère une perte de charge réduisant la puissance du moteur. De telles pertes de charges peuvent alors limiter notamment les performances de vol de l'aéronef.

Il est notamment connu des documents US 2008/190177, US 2009/007528, US 2017/067769 et US 2017/067814 de réaliser des systèmes d'évaluation comportant un dispositif d'information tel un écran permettant d'indiquer à un pilote d'aéronef une information relative au niveau de colmatage d'un filtre à air positionné au niveau d'une entrée air. De tels systèmes d'évaluation comportent également un organe de mesure d'une pression différentielle $\Delta pt$ entre une pression de référence et une pression mesurée en aval du filtre à air dans l'entrée d'air. Un ordinateur embarqué est configuré pour générer l'information requise à partir de la mesure de la pression différentielle $\Delta pt$, l'organe de mesure et le dispositif d'information étant connectés à l'ordinateur embarqué.

Un tel système d'évaluation détermine également une puissance d'utilisation du moteur de l'aéronef à partir de son régime de rotation courant. En fonction de cette puissance d'utilisation, le système d'évaluation peut alors modifier la valeur de seuil de la pression différentielle correspondant à un filtre à air sale.

Ainsi, un tel système d'évaluation permet uniquement de quantifier un écart courant de pression différentielle par rapport à une valeur de seuil variable correspondant à un filtre à air sale, pour un niveau de puissance donné.

Le document US 2015/344141 décrit quant à lui un filtre à air particulier équipé d'un clapet antiretour.

Enfin, le document US 2016/0347479 décrit quant à lui un système permettant de contrôler la santé d'un moteur équipé d'un filtre à air et d'un circuit de dérivation. Le contrôle peut être réalisé lorsque le circuit de dérivation est ouvert ou lorsque le circuit de dérivation est fermé. Cependant, un tel système ne permet pas de connaitre les performances globales de l'installation complète incluant le filtre à air et n'est donc pas représentatif d'un niveau de colmatage du filtre à air.

Un tel système peut alors minimiser le niveau de puissance réel du moteur et engendrer des opérations de maintenance prématurées. Ce système peut également imposer des performances limitées et ainsi permettre par exemple à un aéronef de n'embarquer qu'un nombre limité de personnes.

De plus avec ces différents systèmes d'évaluation, lorsqu'un seuil prédéfini du niveau de colmatage est atteint, le pilote est informé au moyen d'un alerteur tel un écran ou un cadran et il ouvre alors le clapet d'obturation obturant initialement le circuit de dérivation de l'entrée air. Le pilote peut alors poursuivre sa mission. Cependant, la définition de la valeur de seuil est problématique et constitue un compromis entre les performances de vol admissibles de l'aéronef et le temps d'opération pour terminer une mission dans un milieu éventuellement pollué et dont le niveau de pollution n'est pas préalablement connu.

La présente invention a alors pour objet de proposer un système de commande permettant de s'affranchir des limitations mentionnées ci-dessus.

Selon l'invention, un tel système de commande permet au pilote de choisir de laisser fermé ou d'ouvrir le clapet d'obturation en fonction de ses besoins.

Cette possibilité de laisser fermé ou d'ouvrir le clapet d'obturation permet ainsi notamment au pilote dans un premier cas de favoriser l'emport d'une charge utile lourde de l'aéronef si l'environnement dans lequel évolue, ou devra évoluer, l'aéronef est faiblement pollué. Dans ce cas, le pilote choisira d'ouvrir le clapet d'obturation et donc le circuit de dérivation pour que de l'air alimente le ou les moteurs sans passer par le filtre à air en tout ou partie colmaté.

Dans un deuxième cas, le pilote pourra choisir de laisser fermé, au moins temporairement, le clapet d'obturation et ainsi de favoriser la protection du ou des moteurs si le pilote juge que l'environnement extérieur est fortement pollué. Ce deuxième choix s'effectue alors au détriment des performances de vol admissibles par le ou les moteurs.

Ainsi, l'invention concerne un système de commande pour commander un clapet d'obturation d'un aéronef, le clapet d'obturation étant configuré pour ouvrir un circuit de dérivation initialement fermé, le circuit de dérivation permettant d'alimenter en air au moins un moteur de l'aéronef sans passer par au moins un filtre à air équipant une entrée d'air, le système de commande comportant :

- un organe de commande manuel pour commander le clapet d'obturation, cet organe de commande manuel étant actionnable manuellement par un pilote de l'aéronef pour commander une ouverture du circuit de dérivation,
- un premier organe de mesure effectuant une mesure de pression différentielle $\Delta$pt entre une pression de référence et une pression mesurée en aval du ou des filtres à air dans l'entrée d'air,
- un deuxième organe de mesure permettant de déterminer une valeur de la puissance d'utilisation P du ou des moteurs, et
- au moins un calculateur configuré pour calculer une valeur courante d'un taux de colmatage TC du ou des filtres à air, le taux de colmatage TC étant en fonction de la mesure de pression différentielle $\Delta$pt, d'une première limite $\Delta$pc et d'une seconde limite $\Delta$pd prédéterminées à la valeur de la puissance d'utilisation P du ou des moteurs, la première limite $\Delta$pc étant une limite inférieure prédéterminée égale à une valeur de pression différentielle pour un filtre à air propre à la valeur de la puissance d'utilisation P du ou des moteurs, la seconde limite $\Delta$pd étant une limite supérieure prédéterminée égale à une valeur de pression différentielle pour un filtre à air sale à la valeur de la puissance d'utilisation P du ou des moteurs, le premier organe de mesure et le deuxième organe de mesure étant respectivement connectés au(x) calculateur(s).

Selon l'invention, le système de commande est remarquable en ce qu'il comporte :

- au moins un comparateur pour comparer la valeur courante du taux de colmatage TC avec une première valeur de seuil et avec une deuxième valeur de seuil, la deuxième valeur de seuil étant supérieure à la première valeur de seuil,
- au moins un alerteur pour générer un premier signal sensoriel généré lorsque la valeur courante du taux de colmatage TC atteint la première valeur de seuil et un second signal sensoriel généré lorsque la valeur courante du taux de colmatage TC atteint la deuxième valeur de seuil, le premier signal sensoriel étant distinct du second signal sensoriel.

En pratique, le taux de colmatage TC peut être égal à:

$$TC = \frac{\Delta\text{pt} - \Delta\text{pc}}{\Delta\text{pd} - \Delta\text{pc}}$$

Avantageusement, la première limite $\Delta$pc et la

seconde limite $\Delta$pd peuvent être variables en fonction de la puissance d'utilisation P du ou des moteurs.

En d'autres termes, la première limite $\Delta$pc et la seconde limite $\Delta$pd peuvent être associées à des fonctions numériques, les valeurs des première limite $\Delta$pc et seconde limite $\Delta$pd variant avec la puissance d'utilisation P du ou des moteurs.

En outre, on entend désigner par l'expression de "signal sensoriel", un signal visuel par exemple lumineux, un signal sonore ou encore un signal vibratoire généré par l'alerteur. Un tel alerteur ne se limite donc pas à afficher un signal lumineux mais peut comprendre par exemple également un vibrateur, un buzzer, un haut-parleur ou un organe mécanique apte à générer des vibrations notamment dans un siège de l'aéronef ou dans un organe de commande de l'aéronef.

Par ailleurs, le ou les comparateurs permettent de transmettre à un ou aux alerteurs un ordre d'alerte visant à connaitre un positionnement de la valeur courante du taux de colmatage TC par rapport à la première valeur de seuil et à la deuxième valeur de seuil.

Ces première et deuxième valeurs de seuil peuvent par exemple être des valeurs prédéterminées dans un mémoire ou encore être calculées et adaptées lors de l'utilisation de l'aéronef par un calculateur dédié à ce calcul ou par le ou les calculateurs configurés pour calculer la valeur courante du taux de colmatage TC.

Le choix pour le pilote d'actionner ou non l'organe de commande est alors possible à partir du moment où le premier signal sensoriel est généré jusqu'à ce que le second signal sensoriel soit généré. L'organe de commande manuel peut être actionné par le pilote lorsque le premier signal sensoriel est généré. Cependant une fois le second signal sensoriel généré, le pilote n'a plus de choix possible et doit alors actionner l'organe de commande afin d'ouvrir le clapet d'obturation et donc le circuit de dérivation.

En outre, une telle commande de l'ouverture du clapet d'obturation peut être réalisée via un actionneur de type vérin à commande pneumatique, hydraulique ou électrique ou en libérant un organe de verrouillage du clapet d'obturation permettant de verrouiller initialement le clapet d'obturation en position fermée.

Avantageusement, le système de commande peut comporter une unité de traitement pour générer automatiquement un signal de commande d'un actionneur de sécurité permettant d'ouvrir le clapet d'obturation pour commander une ouverture automatique du circuit de dérivation, le signal de commande étant généré lorsque la valeur courante du taux de colmatage TC est supérieure ou égale à une troisième valeur de seuil, la troisième valeur de seuil étant supérieure à la deuxième valeur de seuil. Cette troisième valeur de seuil est définie pour garantir l'opérabilité du moteur et donc la sécurité du vol.

Par sécurité, un tel actionneur de sécurité évite alors au pilote d'utiliser l'air passant au travers du filtre à air lorsque ce filtre à air est trop colmaté correspondant à une valeur courante du taux de colmatage TC égale à la troisième valeur de seuil.

Une telle unité de traitement est alors reliée par voie filaire ou non filaire à ou aux calculateurs configurés pour calculer une valeur courante d'un taux de colmatage TC, à ou aux comparateurs et à l'actionneur de sécurité. Un tel actionneur de sécurité peut également être formé par un vérin à commande pneumatique, hydraulique ou électrique et être distinct ou confondu avec l'actionneur commandé par l'organe de commande manuel.

Selon un premier exemple de réalisation de l'invention, le ou les alerteurs peuvent comporter un unique alerteur pour générer le premier signal sensoriel et le second signal sensoriel.

De cette manière, le premier signal sensoriel et le second signal sensoriel peuvent être générés par l'unique alerteur au même endroit par exemple sur une planche de bord d'un cockpit de l'aéronef.

Dans ce cas, l'unique alerteur peut être choisi parmi le groupe comportant les écrans, les sources lumineuses, les dispositifs holographiques, les cadrans à aiguille et les afficheurs portés par un pilote tels que les lunettes, les lentilles ophtalmologiques et les visières de casque.

Selon un second exemple de réalisation de l'invention, le ou les alerteurs peuvent comporter un premier alerteur pour générer le premier signal sensoriel et un second alerteur pour générer le second signal sensoriel, le second alerteur étant distinct du premier alerteur.

Ainsi, les premier et second alerteurs peuvent être disjoints l'un de l'autre. Le premier alerteur peut être par exemple positionné sur la planche de bord d'un cockpit tandis que le second alerteur peut être un afficheur porté par le pilote, et inversement.

Comme précédemment, les premier et second alerteurs peuvent être choisis parmi le groupe comportant les écrans, les sources lumineuses, les dispositifs holographiques, les cadrans à aiguille et les afficheurs portés par un pilote tels que les lunettes, les lentilles ophtalmologiques et les visières de casque.

En outre, l'invention se rapporte également à un aéronef comportant au moins un moteur pour entraîner en rotation au moins un rotor de sustentation, l'aéronef comportant une entrée d'air équipée d'au moins un filtre à air pour alimenter en air le ou les moteurs, l'aéronef comportant également un circuit de dérivation pour alimenter en air le ou les moteurs sans passer par le ou les filtres à air et un clapet d'obturation configuré pour ouvrir le circuit de dérivation initialement fermé.

Selon l'invention, un tel aéronef est remarquable en ce qu'il comporte un système de commande du clapet d'obturation tel que décrit précédemment.

Par conséquent, un tel aéronef permet au pilote de laisser une possibilité d'actionner ou non l'organe de commande du clapet d'obturation en fonction de la mission qu'il réalise et du niveau de pollution dans lequel il doit ou devra réaliser cette mission. Cette possibilité lui est donnée à partir du moment où le premier signal sensoriel est généré jusqu'à ce que le second signal sensoriel soit généré.

En pratique, l'aéronef peut comporter au moins un calculateur de commande générant une consigne de commande d'un actionneur pour commander le ou les clapets de dérivation.

En outre, lorsque le circuit de dérivation est fermé et que la valeur courante du taux de colmatage TC est inférieure à la première valeur de seuil, l'aéronef peut être piloté avec un niveau maximal de performance disponible égal à un premier niveau de performance disponible, le premier niveau de performance disponible étant ainsi associé à la première valeur de seuil du taux de colmatage TC.

Autrement dit, ce premier niveau de performance disponible est associé à un filtre à air propre ou faiblement colmaté par de la poussière ou des saletés. L'aéronef peut être utilisé normalement et peut embarquer une charge utile maximale.

Cependant, lorsque le circuit de dérivation est ouvert, le niveau maximal de performance disponible de l'aéronef est égal à un deuxième niveau de performance disponible, ce deuxième niveau de performance disponible étant supérieur au premier niveau de performance disponible quel que soit le niveau de colmatage du filtre.

Dans ce cas, lorsque le circuit de dérivation est ouvert le niveau maximal de performance est choisi de manière à être toujours meilleur que celui associé à la première valeur de seuil. Un tel agencement permet de n'avoir qu'un seul niveau maximal de performance et par suite de ne pas surcharger inutilement un manuel de vol de l'aéronef.

Selon un autre aspect de l'invention, lorsque le circuit de dérivation est fermé et que la valeur courante du taux de colmatage TC est comprise entre la première valeur de seuil et la deuxième valeur de seuil, le niveau maximal de performance disponible de l'aéronef est égal à un troisième niveau de performance disponible, le troisième niveau de performance disponible étant associé à la deuxième valeur de seuil et étant inférieur au premier niveau de performance disponible.

Ainsi, le vol peut être poursuivi mais le pilote utilise l'aéronef avec un niveau de performance disponible qui est limité par rapport au premier niveau de performance c'est-à-dire avant de dépasser la première valeur de seuil du taux de colmatage TC.

La présente invention a aussi pour objet un procédé de commande d'un clapet d'obturation d'un aéronef, le clapet d'obturation étant configuré pour ouvrir un circuit de dérivation initialement fermé, le circuit de dérivation permettant d'alimenter en air au moins un moteur de l'aéronef sans passer par au moins un filtre à air équipant une entrée d'air, le procédé de commande comportant :

- une première étape de mesure pour effectuer une mesure de pression différentielle $\Delta pt$ entre une pression de référence et une pression mesurée en aval du ou des filtres à air dans l'entrée d'air,

- une deuxième étape de mesure pour déterminer une valeur de la puissance d'utilisation P du ou des moteurs, et

- au moins une étape de calcul pour calculer une valeur courante d'un taux de colmatage TC du ou des filtres à air, le taux de colmatage TC étant en fonction de la mesure de pression différentielle $\Delta pt$, d'une première limite $\Delta pc$ et d'une seconde limite $\Delta pd$ prédéterminées à la valeur de la puissance d'utilisation P du ou des moteurs, la première limite $\Delta pc$ étant une limite inférieure prédéterminée égale à une valeur de pression différentielle pour un filtre à air propre à la valeur de la puissance d'utilisation P du ou des moteurs, la seconde limite $\Delta pd$ étant une limite supérieure prédéterminée égale à une valeur de pression différentielle pour un filtre à air sale à la valeur de la puissance d'utilisation P du ou des moteurs.

Selon l'invention, un tel procédé de commande est remarquable en ce qu'il comporte :

- au moins une étape de comparaison pour comparer la valeur courante du taux de colmatage TC avec une première valeur de seuil et avec une deuxième valeur de seuil, la deuxième valeur de seuil étant supérieure à la première valeur de seuil,

- une étape d'alerte générant un premier signal sensoriel lorsque la valeur courante du taux de colmatage TC atteint la première valeur de seuil et un second signal sensoriel lorsque la valeur courante du taux de colmatage TC atteint la deuxième valeur de seuil.

Comme déjà évoqué les étapes de calcul et de comparaison peuvent être effectués par un même calculateur, un même processeur, un même ordinateur ou encore par plusieurs équipements. Une fois ces étapes de calcul et comparaison effectuées, le procédé de commande permet alors d'alerter le pilote de l'aéronef avec le premier et le second signal sensoriel en fonction de la valeur courante du taux de colmatage TC.

Avantageusement, le procédé peut comporter une étape d'actionnement d'un organe de commande manuel du clapet d'obturation par un pilote de l'aéronef, l'organe de commande manuel permettant de commander une ouverture du circuit de dérivation, l'étape d'actionnement pouvant être mise en oeuvre lorsque le premier signal sensoriel est généré, et l'étape d'actionnement devant être mise en œuvre lorsque le second signal sensoriel est généré.

Une telle ouverture du circuit de dérivation s'effectue par la commande d'un actionneur tel que par exemple un vérin à commande pneumatique, hydraulique ou électrique. Cette étape d'actionnement de l'organe de commande est mise en œuvre à l'initiative du pilote jugeant utile ou nécessaire d'ouvrir le circuit de dérivation en fonction du niveau de pollution du milieu extérieur et des besoins de performance de vol de la mission à réaliser.

En pratique, le procédé peut comporter une étape de commande automatique du clapet d'obturation pour automatiquement ouvrir le circuit de dérivation lorsque la valeur courante du taux de colmatage TC est supérieure ou égale à une troisième valeur de seuil, la troisième valeur de seuil étant supérieure à la deuxième valeur de seuil.

En outre, cette étape de commande automatique permet, en cas par exemple d'oubli par le pilote de procéder à l'ouverture manuelle du circuit de dérivation, de commander un actionneur de sécurité pour ouvrir le circuit de dérivation. Un tel actionneur de sécurité peut être un actionneur dédié mais également consister en un actionneur permettant de commander l'ouverture manuelle du clapet d'obturation.

De plus, une telle troisième valeur de seuil est définie pour garantir l'opérabilité du moteur de l'aéronef.

Selon un autre aspect de l'invention, on peut générer une consigne de commande pour commander le ou les clapets de dérivation.

Par ailleurs, lorsque le circuit de dérivation est fermé et que la valeur courante du taux de colmatage TC est inférieure à la première valeur de seuil, un niveau maximal de performance disponible de l'aéronef est alors égal à un premier niveau de performance disponible, le premier niveau de performance disponible étant associé à la première valeur de seuil.

Ainsi, le procédé de commande permet d'adapter le niveau de performance d'utilisation du ou des moteurs de l'aéronef. Par suite, le procédé peut comporter une étape visant à utiliser le ou les moteurs avec un niveau maximal de performance disponible associé à la première valeur de seuil.

Par ailleurs, lorsque le circuit de dérivation est ouvert, le niveau maximal de performance disponible de l'aéronef est alors égal à un deuxième niveau de performance disponible, le deuxième niveau de performance disponible étant supérieur au premier niveau de performance disponible.

Dans ce cas, le procédé de commande permet d'améliorer le niveau de performance d'utilisation du ou des moteurs de l'aéronef lorsque le clapet d'obturation est ouvert.

En outre, lorsque le circuit de dérivation est fermé et que la valeur courante du taux de colmatage TC est comprise entre la première valeur de seuil et la deuxième valeur de seuil, le niveau maximal de performance disponible de l'aéronef peut être égal à un troisième niveau de performance disponible, le troisième niveau de performance disponible étant associé à la deuxième valeur de seuil et étant inférieur au premier niveau de performance disponible.

De cette manière, le procédé de commande permet de préserver le ou les moteurs en limitant leur niveau maximal de performance disponible. En effet, avec un filtre à air colmaté ou partiellement colmaté, une perte de charge se produit et peut réduire la puissance du ou des moteurs. Afin de pallier à cette baisse de puissance, le procédé de commande augmente donc le niveau maximal de performance disponible.

Selon un premier exemple de réalisation de l'invention, l'étape d'alerte peut générer le premier signal sensoriel et le second signal sensoriel sur un unique alerteur.

Un tel agencement de l'alerteur permet ainsi de simplifier l'architecture par exemple électronique permettant de réaliser l'alerte avec les premier et second signaux sensoriels. Un tel unique alerteur peut notamment se présenter sous la forme d'un écran ou d'un cadran à aiguille. Un bargraphe représentatif de la valeur courante d'un taux de colmatage TC peut être affiché sur un même écran. Dans ce cas, le premier signal sensoriel peut consister en une première couleur d'affichage du bargraphe, cette première couleur étant par exemple blanche, et le deuxième signal sensoriel peut consister en une deuxième couleur d'affichage du bargraphe, cette deuxième couleur étant par exemple jaune.

Selon un second exemple de réalisation de l'invention, l'étape d'alerte peut générer un premier signal sensoriel avec un premier alerteur et un second signal sensoriel avec un second alerteur distinct du premier alerteur.

Dans ce cas, le premier alerteur et le second alerteur sont disjoints l'un de l'autre et peuvent par exemple soit être agencés au niveau de deux zones distinctes d'une même planche de bord, soit être pour l'un agencé sur une planche de bord et pour l'autre être porté par un pilote de l'aéronef tel un afficheur porté pouvant comprendre une visière de casque, des lunettes ou toute surface transparente analogue.

L'invention et ses avantages apparaîtront avec plus de détails dans le cadre de la description qui suit avec des exemples donnés à titre illustratif en référence aux figures annexées qui représentent :

[Fig 1] la figure 1, une vue de côté illustrant schématiquement un aéronef conforme à l'invention,

[Fig 2] la figure 2, une vue illustrant deux alerteurs selon un autre aspect de l'invention,

[Fig 3] la figure 3, une courbe représentative du taux de colmatage d'un filtre à air en fonction du temps,

[Fig 4] la figure 4, un logigramme illustrant un premier exemple de procédé de commande d'un clapet d'obturation selon l'invention, et

[Fig 5]. la figure 5, un logigramme illustrant un second exemple de procédé de commande d'un clapet d'obturation selon l'invention.

Les éléments présents dans plusieurs figures distinctes sont affectés d'une seule et même référence.

Comme déjà évoqué l'invention se rapporte donc à un système de commande d'un clapet d'obturation d'un aéronef.

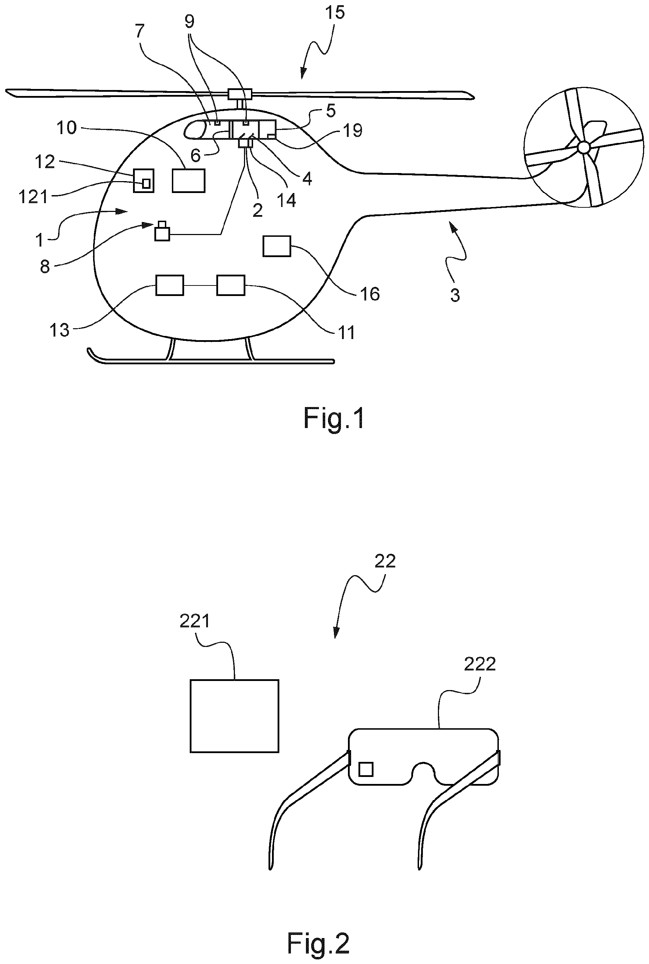

Tel que représenté à la figure 1, un tel clapet d'obturation 2 est configuré pour ouvrir si nécessaire un circuit de dérivation 4 initialement fermé, ce circuit de dérivation 4 permettant d'alimenter en air au moins un moteur 5 d'un aéronef 3 sans passer par au moins un filtre à air 6 équipant une entrée d'air 7.

En outre, un système de commande 1 du clapet d'obturation 2 comporte alors un organe de commande manuel 8 du clapet d'obturation 2. Cet organe de commande manuel 8 est ainsi actionnable manuellement par un pilote de l'aéronef 3 pour commander à la demande du pilote une ouverture du circuit de dérivation 4.

Le système de commande 1 comporte également un premier organe de mesure 9 pour effectuer une mesure de pression différentielle $\Delta pt$ entre une pression de référence et une pression mesurée en aval du ou des filtres à air 6 dans l'entrée d'air 7.

Un deuxième organe de mesure 19 permet quant à lui de déterminer une valeur de la puissance d'utilisation P du ou des moteurs 5.

Par ailleurs, au moins un calculateur 10 est configuré pour calculer une valeur courante d'un taux de colmatage TC du ou des filtres à air 6 sous la dépendance de la mesure de pression différentielle $\Delta pt$ et de la valeur de la puissance d'utilisation P du ou des moteurs 5. Ainsi, le premier organe de mesure 9 et le deuxième organe de mesure 19 sont respectivement connectés au(x) calculateur(s) 10 par voie filaire ou non filaire.

En outre, le système de commande 1 comporte aussi au moins un comparateur 11 permettant de comparer la valeur courante du taux de colmatage TC avec une première valeur de seuil $TC_1$ et avec une deuxième valeur de seuil $TC_2$, cette deuxième valeur de seuil $TC_2$ étant supérieure à la première valeur de seuil $TC_1$.

Selon un premier exemple de réalisation de l'invention représenté à la figure 1, ce système de commande 1 comporte un alerteur 12 comportant un unique alerter 121 permettant de générer au moins deux signaux sensoriels distincts.

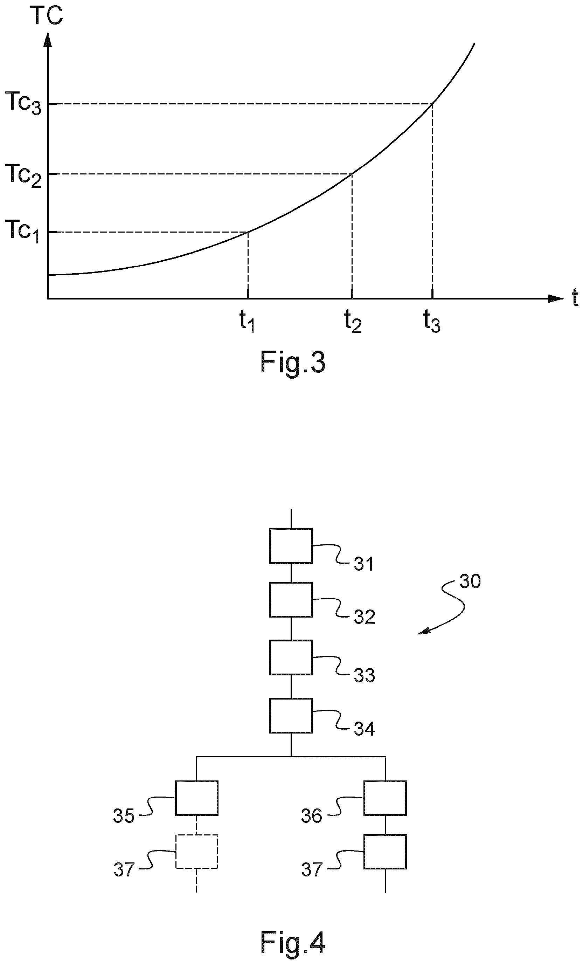

Tels que représentés à la figure 3, ces au moins deux signaux sensoriels distincts comportent un premier signal sensoriel qui est généré à partir l'instant t1 lorsque la valeur courante du taux de colmatage TC atteint la première valeur de seuil $TC_1$ et un second signal sensoriel qui est quant à lui généré à partir de l'instant t2 lorsque la valeur courante du taux de colmatage TC atteint la deuxième valeur de seuil $TC_2$.

Avantageusement l'unique alerteur 121 peut être choisi parmi le groupe comportant les écrans, les sources lumineuses, les dispositifs holographiques, les cadrans à aiguille et les afficheurs portés par un pilote tels que les lunettes, les lentilles ophtalmologiques et les visières de casque.

Selon un second exemple de réalisation de l'invention représenté à la figure 2, le système de commande 1 peut alternativement comporter au moins un alerteur 22 comportant un premier alerteur 221 permettant de générer un premier signal sensoriel et un second alerteur 222 permettant de générer un second signal sensoriel distinct du premier signal sensoriel.

Tel que représenté selon ce second exemple de réalisation, le premier alerteur 221 peut être formé par un écran associé à une planche de bord d'un cockpit de l'aéronef 3 et le second alerteur 222 peut être formé par un afficheur porté par le pilote tel que des lunettes, des lentilles ophtalmologiques et des visières de casque.

Par ailleurs, l'organe de commande manuel 8 peut alors être actionné par le pilote lorsque le premier signal sensoriel est généré mais cet organe de commande manuel 8 doit être actionné par le pilote lorsque le second signal sensoriel est généré.

En outre, le système de commande 1 peut également comporter une unité de traitement 13 apte à générer automatiquement un signal de commande d'un actionneur de sécurité 14 permettant d'actionner le clapet d'obturation 2 pour commander une ouverture automatique du circuit de dérivation 4. A l'instant t3 représenté à la figure 3, ce signal de commande est alors généré automatiquement par l'unité de traitement 13 lorsque la valeur courante du taux de colmatage TC est supérieure ou égale à une troisième valeur de seuil $TC_3$, cette troisième valeur de seuil $TC_3$ étant supérieure à la deuxième valeur de seuil $TC_2$.

En outre, le ou les calculateurs 10, le ou les comparateurs 11 ainsi que l'unité de traitement 13 peuvent être des organes distincts l'un de l'autre ou alternativement être confondus les uns avec les autres. De plus, le ou les calculateurs 10, le ou les comparateurs 11 et l'unité de traitement 13 peuvent comprendre par exemple au moins un processeur et au moins une mémoire, au moins un circuit intégré, au moins un système programmable, au moins un circuit logique, ces exemples ne limitant pas la portée donnée à aux expressions de « calculateur », « comparateur » et « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs l'aéronef 3 peut comporter un calculateur de commande 16 permettant de générer une consigne de commande du ou des clapets d'obturation 2.

En outre, avant l'instant t1 de la figure 3, lorsque le circuit de dérivation 4 est fermé et que la valeur courante du taux de colmatage TC est inférieure à la première valeur de seuil $TC_1$, l'aéronef peut être piloté avec un niveau maximal de performance disponible du ou des moteurs 5 qui peut être égal à un premier niveau de performance disponible, ce premier niveau de performance disponible étant associé à la première valeur de seuil $TC_1$.

En outre à tout moment et si le circuit de dérivation 4 est ouvert, le niveau maximal de performance disponible du ou des moteurs 5 peut être égal à un deuxième niveau de performance disponible, le deuxième niveau de performance disponible étant supérieur au premier niveau de performance disponible.

En revanche entre l'instant t1 et t2, si le circuit de dérivation 4 est encore fermé, la valeur courante du taux de colmatage TC est alors comprise entre la première valeur de seuil $TC_1$ et la deuxième valeur de seuil $TC_2$. Dans ce cas, le niveau maximal de performance disponible moteurs 5 peut être égal à un troisième niveau de performance disponible, ce troisième niveau de performance disponible étant associé à la deuxième valeur de seuil $TC_2$ et étant inférieur au premier niveau de performance disponible.

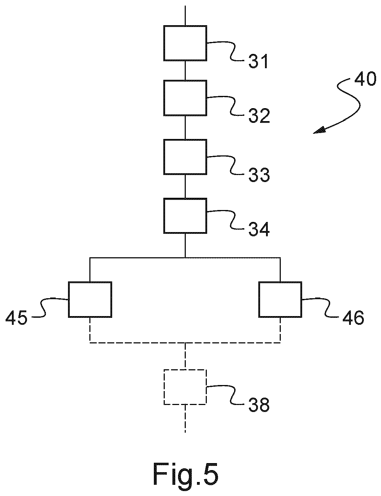

Telle que représentée aux figures 4 et 5, l'invention se rapporte également à un procédé de commande 30, 40 d'un clapet d'obturation 2 d'un aéronef 3.

Selon un tel procédé de commande 30, 40 permet alors à un pilote de mettre en oeuvre des étapes pour commander un clapet d'obturation 2, un tel clapet d'obturation 2 étant configuré pour ouvrir un circuit de dérivation 4 initialement fermé, le circuit de dérivation 4 permettant d'alimenter en air au moins un moteur 5 de l'aéronef 3 sans passer par au moins un filtre à air 6 équipant une entrée d'air 7.

Par ailleurs, le procédé de commande 30, 40 comporte une première étape de mesure 31 pour effectuer une mesure de pression différentielle Δpt entre une pression de référence et une pression mesurée en aval du ou des filtres à air 6 dans l'entrée d'air 7.

Le procédé de commande 30, 40 comporte ensuite une deuxième étape de mesure 32 pour déterminer une valeur de la puissance d'utilisation P du ou des moteurs 5 et au moins une étape de calcul 33 pour calculer une valeur courante d'un taux de colmatage TC du ou des filtres à air 6 sous la dépendance de la mesure de pression différentielle Δpt et de la valeur de la puissance d'utilisation P du ou des moteurs 5.

Par ailleurs, le procédé de commande 30, 40 comporte également au moins une étape de comparaison 34 pour comparer la valeur courante du taux de colmatage TC avec une première valeur de seuil $TC_1$ et avec une deuxième valeur de seuil $TC_2$, la deuxième valeur de seuil $TC_2$ étant supérieure à la première valeur de seuil $TC_1$.

Le procédé de commande 30, 40 peut comporter alors au moins deux étapes d'alerte 35 et 36, 45 et 46 générant au moins deux signaux sensoriels distincts, une première étape d'alerte 35, 45 générant un premier signal sensoriel lorsque la valeur courante du taux de colmatage TC atteint la première valeur de seuil $TC_1$ et une deuxième étape d'alerte 36, 46 générant un second signal sensoriel lorsque la valeur courante du taux de colmatage TC atteint la deuxième valeur de seuil $TC_2$.

Telles que représentées à la figure 4, les au moins deux étapes d'alerte 35 et 36 génèrent le premier signal sensoriel et le second signal sensoriel sur un unique alerteur 121 tel que représenté à la figure 1.

De plus, une telle première variante du procédé de commande 30 peut comporter une étape d'actionnement 37 d'un organe de commande manuel 8 du clapet d'obturation 2 par un pilote de l'aéronef 3. Cet organe de commande manuel 8 permet alors de commander manuellement une ouverture du circuit de dérivation 4 à partir de l'instant t1 représenté à la figure 3. Cette étape d'actionnement 37 peut donc être mise en oeuvre lorsque le premier signal sensoriel est généré, et l'étape d'actionnement 37 devant être mise en oeuvre lorsque le second signal sensoriel est généré.

Alternativement et telles que représentées à la figure 5, les étapes d'alerte 45 et 46 peuvent comporter une première étape d'alerte 45 générant un premier signal sensoriel sur un premier alerteur 221 tel que représenté à la figure 2 et une seconde étape d'alerte 46 générant un second signal sensoriel sur un second alerteur 222 distinct du premier alerteur 221.

Selon cette seconde variante du procédé de commande 40 représentée à la figure 5, le procédé de commande 40 peut comporter, si le pilote n'a pas actionné l'organe de commande manuel 8 du clapet d'obturation 2, une étape de commande automatique 38 du clapet d'obturation 2 pour commander automatiquement une ouverture du circuit de dérivation 4.

Une telle étape de commande automatique 38 peut ainsi être mise en oeuvre automatiquement à, ou à partir de, l'instant t3 représenté à la figure 3 au moyen d'un actionneur de sécurité 14.

Comme déjà évoqué l'instant t3 correspond à l'instant où la valeur courante du taux de colmatage TC dépasse la troisième valeur de seuil $TC_3$, cette troisième valeur de seuil $TC_3$ étant supérieure à ladite deuxième valeur de seuil $TC_2$.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

**Revendications**

1. Système de commande (1) pour commander un clapet d'obturation (2) d'un aéronef (3), ledit clapet d'obturation (2) étant configuré pour ouvrir un circuit de dérivation (4) initialement fermé, ledit circuit de dérivation (4) permettant d'alimenter en air au moins un moteur (5) dudit aéronef (3) sans passer par au moins un filtre à air (6) équipant une entrée d'air (7), ledit système de commande (1) comportant :

   • un organe de commande manuel (8) pour commander ledit clapet d'obturation (2), ledit organe de commande manuel (8) étant actionnable manuellement par un pilote dudit aéronef (3) pour commander une ouverture dudit circuit de dérivation (4),
   • un premier organe de mesure (9) effectuant une mesure de pression différentielle Δpt entre une pression de référence et une pression mesurée en aval dudit au moins un filtre à air (6) dans ladite entrée d'air (7),
   • un deuxième organe de mesure (19) permettant de déterminer une valeur de la puissance d'utilisation P dudit au moins un moteur (5), et
   • au moins un calculateur (10) configuré pour calculer une valeur courante d'un taux de colmatage TC dudit au moins un filtre à air (6), ledit taux de colmatage TC étant en fonction de ladite mesure de pression différentielle Δpt, d'une première limite Δpc et d'une seconde limite Δpd prédéterminées à ladite valeur de la puissance d'utilisation P dudit au moins un moteur (5), ladite première limite Δpc étant une limite inférieure prédéterminée égale à une valeur de pression différentielle pour un filtre à air propre à ladite valeur de la puissance d'utilisation P dudit au moins un moteur (5), ladite seconde limite Δpd étant une limite supérieure prédéterminée égale à une valeur de pression différentielle pour un filtre à air sale à ladite valeur de la puissance d'utilisation P dudit au moins un moteur (5), ledit premier organe de mesure (9) et ledit deuxième organe de mesure (19) étant respectivement connectés audit au moins un calculateur (10),
   • au moins un comparateur (11) pour comparer ladite valeur courante dudit taux de colmatage TC avec une première valeur de seuil $TC_1$ et avec une deuxième valeur de seuil $TC_2$, ladite deuxième valeur de seuil $TC_2$ étant supérieure à ladite première valeur de seuil $TC_1$,
   • au moins un alerteur (12, 22) pour générer un premier signal sensoriel généré lorsque ladite valeur courante dudit taux de colmatage TC atteint ladite première valeur de seuil $TC_1$ et un second signal sensoriel généré lorsque ladite valeur courante dudit taux de colmatage TC atteint ladite deuxième valeur de seuil $TC_2$, ledit premier signal sensoriel étant distinct dudit second signal sensoriel.

2. Système de commande selon la revendication 1, **caractérisé en ce que** ledit système de commande (1) comporte une unité de traitement (13) pour générer automatiquement un signal de commande d'un actionneur de sécurité (14) permettant d'actionner ledit clapet d'obturation (2) pour commander une ouverture automatique dudit circuit de dérivation (4), ledit signal de commande étant généré lorsque ladite valeur courante dudit taux de colmatage TC est supérieure ou égale à une troisième valeur de seuil $TC_3$, ladite troisième valeur de seuil $TC_3$ étant supérieure à ladite deuxième valeur de seuil $TC_2$.

**3.** Système de commande selon l'une quelconque des revendications 1 à 2, **caractérisé en ce que** ledit au moins un alerteur (12) comporte un unique alerteur (121) pour générer ledit premier signal sensoriel et ledit second signal sensoriel.

**4.** Système de commande selon la revendication 3, **caractérisé en ce que** ledit unique alerteur (121) est choisi parmi le groupe comportant les écrans, les sources lumineuses, les dispositifs holographiques, les cadrans à aiguille et les afficheurs portés par un pilote tels que les lunettes, les lentilles ophtalmologiques et les visières de casque.

**5.** Système de commande selon l'une quelconque des revendications 1 à 2, **caractérisé en ce que** ledit au moins un alerteur (22) comporte un premier alerteur (221) pour générer ledit premier signal sensoriel et un second alerteur (222) pour générer ledit second signal sensoriel, ledit second alerteur (222) étant distinct dudit premier alerteur (221).

**6.** Système de commande selon la revendication 5, **caractérisé en ce que** lesdits premier et second alerteurs (221, 222) sont choisis parmi le groupe comportant les écrans, les sources lumineuses, les dispositifs holographiques, les cadrans à aiguille et les afficheurs portés par un pilote tels que les lunettes, les lentilles ophtalmologiques et les visières de casque.

**7.** Aéronef (3) comportant au moins un moteur (5) pour entraîner en rotation au moins un rotor de sustentation (15), ledit aéronef (3) comportant une entrée d'air (7) équipée d'au moins un filtre à air (6) pour alimenter en air ledit au moins un moteur (5), ledit aéronef (3) comportant un circuit de dérivation (4) pour alimenter en air ledit au moins un moteur (5) sans passer par ledit au moins un filtre à air (6) et un clapet d'obturation (2) configuré pour ouvrir ledit circuit de dérivation (4) initialement fermé, **caractérisé en ce que** ledit aéronef (3) comporte un système de commande (1) dudit clapet d'obturation (2) selon l'une quelconque des revendications 1 à 6.

**8.** Procédé de commande (30, 40) d'un clapet d'obturation (2) d'un aéronef (3), ledit clapet d'obturation (2) étant configuré pour ouvrir un circuit de dérivation (4) initialement fermé, ledit circuit de dérivation (4) permettant d'alimenter en air au moins un moteur (5) dudit aéronef (3) sans passer par au moins un filtre à air (6) équipant une entrée d'air (7), ledit procédé de commande (30, 40) comportant :

• une première étape de mesure (31) pour effectuer une mesure de pression différentielle $\Delta pt$ entre une pression de référence et une pression mesurée en aval dudit au moins un filtre à air (6) dans ladite entrée d'air (7),
• une deuxième étape de mesure (32) pour déterminer une valeur de la puissance d'utilisation P dudit au moins un moteur (5), et
• au moins une étape de calcul (33) pour calculer une valeur courante d'un taux de colmatage TC dudit au moins un filtre à air (6), ledit taux de colmatage TC étant en fonction de ladite mesure de pression différentielle $\Delta pt$, d'une première limite $\Delta pc$ et d'une seconde limite $\Delta pd$ prédéterminées à ladite valeur de la puissance d'utilisation P dudit au moins un moteur (5), ladite première limite $\Delta pc$ étant une limite inférieure prédéterminée égale à une valeur de pression différentielle pour un filtre à air propre à ladite valeur de la puissance d'utilisation P dudit au moins un moteur (5), ladite seconde limite $\Delta pd$ étant une limite supérieure prédéterminée égale à une valeur de pression différentielle pour un filtre à air sale à ladite valeur de la puissance d'utilisation P dudit au moins un moteur (5),
• au moins une étape de comparaison (34) pour comparer ladite valeur courante dudit taux de colmatage TC avec une première valeur de seuil $TC_1$ et avec une deuxième valeur de seuil $TC_2$, ladite deuxième valeur de seuil $TC_2$ étant supérieure à ladite première valeur de seuil $TC_1$,
• une étape d'alerte (35, 36, 45, 46) générant un premier signal sensoriel lorsque ladite valeur courante dudit taux de colmatage TC est comprise entre ladite première valeur de seuil $TC_1$ et ladite deuxième valeur de seuil $TC_2$ et un second signal sensoriel lorsque ladite valeur courante dudit taux de colmatage TC est supérieure ou égale à ladite deuxième valeur de seuil $TC_2$.

**9.** Procédé de commande selon la revendication 8, **caractérisé en ce que** ledit procédé (30) comporte une étape d'actionnement (37) d'un organe de commande manuel (8) dudit clapet d'obturation (2) par un pilote dudit aéronef (3), ledit organe de commande manuel (8) permettant de commander une ouverture dudit circuit de dérivation (4), ladite étape d'actionnement (37) pouvant être mise en oeuvre lorsque ledit premier signal sensoriel est généré, et ladite étape d'actionnement (37) devant être mise en oeuvre lorsque ledit second signal sensoriel est généré.

**10.** Procédé de commande selon l'une quelconque des revendications 8 à 9, **caractérisé en ce que** ledit procédé (40) comporte une étape de commande automatique (38) dudit clapet d'obturation (2) pour automatiquement ouvrir ledit circuit de dérivation (4) lorsque ladite valeur courante dudit taux de colmatage TC est supérieure ou égale à une troisième valeur de seuil $TC_3$, ladite troisième valeur de seuil $TC_3$ étant supérieure à ladite deuxième valeur de seuil $TC_2$.

11. Procédé de commande selon l'une quelconque des revendications 8 à 10,
**caractérisé en ce que** ladite étape d'alerte (35, 36) génère ledit premier signal sensoriel et ledit second signal sensoriel sur un unique alerteur (121).

12. Procédé de commande selon l'une quelconque des revendications 8 à 10,
**caractérisé en ce que** ladite étape d'alerte (45, 46) génèrent un premier signal sensoriel sur un premier alerteur (221) et un second signal sensoriel sur un second alerteur (222) distinct dudit premier alerteur (221).


**Patentansprüche**

1. Steuersystem (1) zum Steuern einer Absperrklappe (2) eines Luftfahrzeugs (3), wobei die Absperrklappe (2) konfiguriert ist, um einen anfänglich geschlossenen Bypass-Kreislauf (4) zu öffnen, wobei der Bypass-Kreislauf (4) es ermöglicht, mindestens ein Triebwerk (5) des Luftfahrzeugs (3) mit Luft zu versorgen, ohne über mindestens einen Luftfilter (6) zu gehen, mit dem ein Lufteinlass (7) ausgestattet ist, wobei das Steuersystem (1) umfasst:

- ein manuelles Steuerorgan (8) zum Steuern der Absperrklappe (2), wobei das manuelle Steuerorgan (8) von einem Piloten des Luftfahrzeugs (3) manuell betätigbar ist, um eine Öffnung des Bypass-Kreislaufs (4) zu steuern,
- ein erstes Messorgan (9), das eine Messung eines Differenzdrucks $\Delta pt$ zwischen einem Referenzdruck und einem stromabwärts von dem mindestens einen Luftfilter (6) in dem Lufteinlass (7) gemessenen Druck durchführt,
- ein zweites Messorgan (19), das es ermöglicht, einen Wert für die Betriebsleistung P des mindestens einen Triebwerks (5) zu bestimmen, und
- mindestens einen Rechner (10), der konfiguriert ist, um einen aktuellen Wert eines Verstopfungsgrads TC des mindestens einen Luftfilters (6) zu berechnen, wobei der Verstopfungsgrad TC eine Funktion der Messung des Differenzdrucks $\Delta pt$, eines ersten Grenzwerts $\Delta pc$ und eines zweiten Grenzwerts $\Delta pd$ ist, die zu dem Wert der Betriebsleistung P des mindestens einen Triebwerks (5) vorgegeben sind, wobei der erste Grenzwert $\Delta pc$ ein vorgegebener unterer Grenzwert ist, der gleich einem Wert des Differenzdrucks für einen sauberen Luftfilter bei dem Wert der Betriebsleistung P des mindestens einen Triebwerks (5) ist, wobei der zweite Grenzwert $\Delta pd$ ein vorgegebener oberer Grenzwert ist, der gleich einem Wert des Differenzdrucks für einen schmutzigen Luftfilter bei dem Wert der Betriebsleistung P des mindestens einen Triebwerks (5) ist, wobei das erste Messorgan (9) und das zweite Messorgan (19) jeweils mit dem mindestens einen Rechner (10) verbunden sind,
- mindestens einen Komparator (11) zum Vergleichen des aktuellen Werts des Verstopfungsgrads TC mit einem ersten Schwellenwert $TC_1$ und mit einem zweiten Schwellenwert $TC_2$, wobei der zweite Schwellenwert $TC_2$ größer ist als der erste Schwellenwert $TC_1$,
- mindestens einen Alarmgeber (12, 22) zum Erzeugen eines ersten sensorischen Signals, das erzeugt wird, wenn der aktuelle Wert des Verstopfungsgrads TC den ersten Schwellenwert $TC_1$ erreicht, und eines zweiten sensorischen Signals, das erzeugt wird, wenn der aktuelle Wert des Verstopfungsgrads TC den zweiten Schwellenwert $TC_2$ erreicht, wobei das erste sensorische Signal von dem zweiten sensorischen Signal verschieden ist.

2. Steuersystem nach Anspruch 1,
**dadurch gekennzeichnet, dass** das Steuersystem (1) eine Verarbeitungseinheit (13) umfasst, um automatisch ein Steuersignal für einen Sicherheitsaktuator (14) zu erzeugen, der es ermöglicht, das Verschlussventil (2) zu betätigen, um eine automatische Öffnung des Bypass-Kreislaufs (4) zu steuern, wobei das Steuersignal erzeugt wird, wenn der aktuelle Wert des Verstopfungsgrads TC größer als oder gleich einem dritten Schwellenwert $TC_3$ ist, wobei der dritte Schwellenwert $TC_3$ größer als der zweite Schwellenwert $TC_2$ ist.

3. Steuersystem nach einem der Ansprüche 1 bis 2,
**dadurch gekennzeichnet, dass** der mindestens eine Alarmgeber (12) einen einzigen Alarmgeber (121) zum Erzeugen des ersten sensorischen Signals und des zweiten sensorischen Signals umfasst.

4. Steuersystem nach Anspruch 3,
**dadurch gekennzeichnet, dass** der einzige Alarmgeber (121) aus der Gruppe ausgewählt ist, die Bildschirme, Lichtquellen, holographische Vorrichtungen, Zeigerinstrumente und von einem Piloten getragene Anzeigen wie Brillen, ophthalmologische Linsen und Helmvisiere umfasst.

5. Steuersystem nach einem der Ansprüche 1 bis 2,
**dadurch gekennzeichnet, dass** der mindestens eine Alarmgeber (22) einen ersten Alarmgeber (221) zum Erzeugen des ersten sensorischen Signals und einen zweiten Alarmgeber (222) zum Erzeugen des zweiten sensorischen Signals umfasst, wobei der zweite Alarmgeber (222) von dem ersten Alarmgeber (221) verschieden ist.

6. Steuersystem nach Anspruch 5,
**dadurch gekennzeichnet, dass** der erste und der zweite Alarmgeber (221, 222) aus der Gruppe ausgewählt sind, die Bildschirme, Lichtquellen, holographische Vorrichtungen, Zeigerinstrumente und von einem Piloten getragene Anzeigen wie Brillen, ophthalmologische Linsen und Helmvisiere umfasst.

7. Luftfahrzeug (3) mit mindestens einem Triebwerk (5) zum Drehantreiben mindestens eines Auftriebsrotors (15), wobei das Luftfahrzeug (3) einen Lufteinlass (7) mit mindestens einem Luftfilter (6) zur Luftversorgung des mindestens einen Triebwerks (5) aufweist, wobei das Luftfahrzeug (3) einen Bypass-Kreislauf (4) zum Zuführen von Luft zu dem mindestens einen Triebwerk (5), ohne durch den mindestens einen Luftfilter (6) zu gehen, und eine Absperrklappe (2) umfasst, das konfiguriert ist, um den anfänglich geschlossenen Bypass-Kreislauf (4) zu öffnen,
**dadurch gekennzeichnet, dass** das Luftfahrzeug (3) ein Steuersystem (1) für die Absperrklappe (2) nach einem der Ansprüche 1 bis 6 aufweist.

8. Verfahren zum Steuern (30, 40) einer Absperrklappe (2) eines Luftfahrzeugs (3), wobei die Absperrklappe (2) konfiguriert ist, um einen anfänglich geschlossenen Bypass-Kreislauf (4) zu öffnen, wobei der Bypass-Kreislauf (4) es ermöglicht, mindestens ein Triebwerk (5) des Luftfahrzeugs (3) mit Luft zu versorgen, ohne durch mindestens einen Luftfilter (6) zu gehen, mit dem ein Lufteinlass (7) ausgestattet ist, wobei das Steuerverfahren (30, 40) umfasst:

- einen ersten Messschritt (31) zum Durchführen einer Messung eines Differenzdrucks $\Delta pt$ zwischen einem Referenzdruck und einem stromabwärts von dem mindestens einen Luftfilter (6) in dem Lufteinlass (7) gemessenen Druck,
- einen zweiten Messschritt (32) zum Bestimmen eines Wertes der Betriebsleistung P des mindestens einen Triebwerks (5), und
- mindestens einen Rechenschritt (33) zum Berechnen eines aktuellen Werts eines Verstopfungsgrads TC des mindestens einen Luftfilters (6), wobei der Verstopfungsgrad TC eine Funktion der Messung des Differenzdrucks $\Delta pt$, eines ersten Grenzwerts $\Delta pc$ und eines zweiten Grenzwerts $\Delta pd$ ist, die zu dem Wert der Betriebsleistung P des mindestens einen Motors (5) vorgegeben sind, wobei der erste Grenzwert $\Delta pc$ ein vorgegebener unterer Grenzwert ist, der gleich einem Differenzdruckwert für einen sauberen Luftfilter bei dem Wert der Betriebsleistung P des mindestens einen Motors (5) ist, wobei der zweite Grenzwert $\Delta pd$ ein vorgegebener oberer Grenzwert ist, der gleich einem Differenzdruckwert für einen schmutzigen Luftfilter bei dem Wert der Betriebsleistung P des mindestens einen Motors (5) ist,
- mindestens einen Vergleichsschritt (34) zum Vergleichen des aktuellen Werts des Verschmutzungsgrads TC mit einem ersten Schwellenwert $TC_1$ und mit einem zweiten Schwellenwert $TC_2$, wobei der zweite Schwellenwert $TC_2$ größer ist als der erste Schwellenwert $TC_1$,
- einen Alarmschritt (35, 36, 45, 46), der ein erstes sensorisches Signal erzeugt, wenn der aktuelle Wert des Verstopfungsgrads TC zwischen dem ersten Schwellenwert $TC_1$ und dem zweiten Schwellenwert $TC_2$ liegt, und ein zweites sensorisches Signal erzeugt, wenn der aktuelle Wert des Verstopfungsgrads TC größer oder gleich dem zweiten Schwellenwert $TC_2$ ist.

9. Steuerverfahren nach Anspruch 8,
**dadurch gekennzeichnet, dass** das Verfahren (30) einen Schritt des Betätigens (37) eines manuellen Steuerorgans (8) des Verschlussventils (2) durch einen Piloten des Luftfahrzeugs (3) umfasst, wobei das manuelle Steuerorgan (8) es ermöglicht, ein Öffnen des Bypass-Kreislaufs (4) zu steuern, wobei der Schritt des Betätigens (37) durchgeführt werden kann, wenn das erste Sensorsignal erzeugt wird, und der Schritt des Betätigens (37) durchgeführt werden muss, wenn das zweite Sensorsignal erzeugt wird.

10. Steuerverfahren nach einem der Ansprüche 8 bis 9,
**dadurch gekennzeichnet, dass** das Verfahren (40) einen Schritt des automatischen Steuerns (38) der Absperrklappe (2) umfasst, um den Bypass-Kreislauf (4) automatisch zu öffnen, wenn der aktuelle Wert der Verstopfungsrate TC größer oder gleich einem dritten Schwellenwert $TC_3$ ist, wobei der dritte Schwellenwert $TC_3$ größer als der zweite Schwellenwert $TC_2$ ist.

11. Steuerverfahren nach einem der Ansprüche 8 bis 10,
**dadurch gekennzeichnet, dass** der Alarmschritt (35, 36) das erste Sensorsignal und das zweite Sensorsignal auf einem einzigen Alarmgeber (121) erzeugt.

12. Steuerungsverfahren nach einem der Ansprüche 8 bis 10,
**dadurch gekennzeichnet, dass** der Alarmschritt (45, 46) ein erstes sensorisches Signal auf einem ersten Alarmgeber (221) und ein zweites sensorisches Signal auf einem zweiten Alarmgeber (222), der von dem ersten Alarmgeber (221) verschieden ist, erzeugt.

**Claims**

1. Control system (1) for controlling a shut-off valve (2) of an aircraft (3), said shut-off valve (2) being configured to open an initially closed bypass circuit (4), said bypass circuit (4) being intended for supplying air to at least one engine (5) of said aircraft (3) without passing through at least one air filter (6) provided on an air inlet (7), said control system (1) comprising:

   • a manual control means (8) for controlling said shut-off valve (2), it being possible for a pilot of said aircraft (3) to manually actuate said manual control means (8) in order to control opening of said bypass circuit (4),
   • a first measuring means (9) performing a differential pressure measurement $\Delta pt$ between a reference pressure and a pressure measured downstream of said at least one air filter (6) in said air inlet (7),
   • a second measuring means (19) for determining a value of the utilisation power P of said at least one engine (5), and
   • at least one computer (10) configured to calculate a current value of a clogging level TC of said at least one air filter (6), said clogging level TC being a function of said differential pressure measurement $\Delta pt$, of a first predetermined limit $\Delta pc$ and a second predetermined limit $\Delta pd$ at said value of the utilisation power P of said at least one engine (5), said first limit $\Delta pc$ being a predetermined lower limit equal to a differential pressure value for a clean air filter at said value of the utilisation power P of said at least one engine (5), said second limit $\Delta pd$ being a predetermined upper limit equal to a differential pressure value for a dirty air filter at said value of the utilisation power P of said at least one engine (5), said first measuring means (9) and said second measuring means (19) each being connected to said at least one computer (10),
   • at least one comparator (11) for comparing said current value of said clogging level TC with a first threshold value $TC_1$ and with a second threshold value $TC_2$, said second threshold value $TC_2$ being greater than said first threshold value $TC_1$, and
   • at least one alerter (12, 22) for generating a first sensory signal which is generated when said current value of said clogging level TC reaches said first threshold value $TC_1$ and a second sensory signal which is generated when said current value of said clogging level TC reaches said second threshold value $TC_2$, said first sensory signal being different from said second sensory signal.

2. Control system according to claim 1, **characterised in that** said control system (1) comprises a processing unit (13) for automatically generating a control signal for a safety actuator (14) for actuating said shut-off valve (2) in order to control automatic opening of said bypass circuit (4), said control signal being generated when said current value of said clogging level TC is greater than or equal to a third threshold value $TC_3$, said third threshold value $TC_3$ being greater than said second threshold value $TC_2$.

3. Control system according to either claim 1 or claim 2, **characterised in that** said at least one alerter (12) comprises a single alerter (121) for generating said first sensory signal and said second sensory signal.

4. Control system according to claim 3, **characterised in that** said single alerter (121) is selected from the group comprising screens, light sources, holographic devices, needle dials and displays worn by a pilot such as glasses, ophthalmological lenses and helmet visors.

5. Control system according to either claim 1 or claim 2, **characterised in that** said at least one alerter (22) comprises a first alerter (221) for generating said first sensory signal and a second alerter (222) for generating said second sensory signal, said second alerter (222) being different from said first alerter (221).

6. Control system according to claim 5, **characterised in that** said first and second alerters (221, 222) are selected from the group comprising screens, light sources, holographic devices, needle dials and displays worn by a pilot such as glasses, ophthalmological lenses and helmet visors.

7. Aircraft (3) comprising at least one engine (5) for rotating at least one lift rotor (15), said aircraft (3) comprising an air inlet (7) provided with at least one air filter (6) for supplying air to said at least one engine (5), said aircraft (3) comprising a bypass circuit (4) for supplying air to said at least one engine (5) without passing through said at least one air filter (6), and a shut-off valve (2) configured to open said initially closed bypass circuit (4),
**characterised in that** said aircraft (3) comprises a system (1) for controlling said shut-off valve (2) according to any of claims 1 to 6.

8. Method (30, 40) for controlling a shut-off valve (2) of an aircraft (3), said shut-off valve (2) being configured to open an initially closed bypass circuit (4), said bypass circuit (4) being intended for supplying air to at least one engine (5) of said aircraft (3) without passing through at least one air filter (6) provided on an air inlet (7), said control method (30, 40) comprising:

> • a first measurement step (31) for performing a differential pressure measurement $\Delta pt$ between a reference pressure and a pressure measured downstream of said at least one air filter (6) in said air inlet (7),
> • a second measurement step (32) for determining a value of the utilisation power P of said at least one engine (5), and
> • at least one calculation step (33) for calculating a current value of a clogging level TC of said at least one air filter (6), said clogging level TC being a function of said differential pressure measurement $\Delta pt$, of a first predetermined limit $\Delta pc$ and a second predetermined limit $\Delta pd$ at said value of the utilisation power P of said at least one engine (5), said first limit $\Delta pc$ being a predetermined lower limit equal to a differential pressure value for a clean air filter at said value of the utilisation power P of said at least one engine (5), said second limit $\Delta pd$ being a predetermined upper limit equal to a differential pressure value for a dirty air filter at said value of the utilisation power P of said at least one engine (5),
> • at least one comparison step (34) for comparing said current value of said clogging level TC with a first threshold value $TC_1$ and with a second threshold value $TC_2$, said second threshold value $TC_2$ being greater than said first value threshold $TC_1$, and
> • an alerting step (35, 36, 45, 46) generating a first sensory signal when said current value of said clogging level TC is between said first threshold value $TC_1$ and said second threshold value $TC_2$, and a second sensory signal when said current value of said clogging level TC is greater than or equal to said second threshold value $TC_2$.

9. Control method according to claim 8, **characterised in that** said method (30) comprises a step (37) in which a pilot of said aircraft (3) actuates a manual control means (8) of said shut-off valve (2), said manual control means (8) being intended for controlling an opening of said bypass circuit (4), it being possible to implement said actuating step (37) when said first sensory signal is generated, and it being intended to implement said actuating step (37) when said second sensory signal is generated.

10. Control method according to either claim 8 or claim 9, **characterised in that** said method (40) comprises a step of automatically controlling (38) said shut-off valve (2) to automatically open said bypass circuit (4) when said current value of said clogging level TC is greater than or equal to a third threshold value $TC_3$, said third threshold value $TC_3$ being greater than said second threshold value $TC_2$.

11. Control method according to any of claims 8 to 10, **characterised in that** said alerting step (35, 36) generates said first sensory signal and said second sensory signal on a single alerter (121).

12. Control method according to any of claims 8 to 10, **characterised in that** said alerting step (45, 46) generate a first sensory signal on a first alerter (221) and a second sensory signal on a second alerter (222) that is different from said first alerter (221).

Fig.1

Fig.2

Fig.3

Fig.4

Fig.5

## RÉFÉRENCES CITÉES DANS LA DESCRIPTION

**Documents brevets cités dans la description**

- US 2008190177 A
- US 2009007528 A
- US 2017067769 A
- US 2017067814 A
- US 2015344141 A
- US 20160347479 A